# FASCICULE DE BREVET EUROPEEN

(11) **EP 3 425 772 B1**
(45) Date de publication et mention de la délivrance du brevet: **25.11.2020**
(21) Numéro de dépôt: 17305855.3
(22) Date de dépôt: 03.07.2017
(51) Int. Cl.: H02K 1/32, H02K 1/20

(54) **MACHINE ÉLECTRIQUE TOURNANTE COMPRENANT UN STATOR ET UN ROTOR**
ELEKTRISCH UMLAUFENDE MASCHINE, DIE EINEN STATOR UND EINEN ROTOR UMFASST
ROTARY ELECTRICAL MACHINE COMPRISING A STATOR AND A ROTOR

(43) Date de publication de la demande: 09.01.2019
(73) Titulaire: GE Energy Power Conversion Technology Limited, Rugby Warwickshire CV21 1BU (GB)
(72) Inventeur: GALMICHE, Christophe, 54250 Champigneulles (FR); ROCHE, Fabien, 54250 Champigneulles (FR)
(74) Mandataire: Casalonga

(56) Documents cités:
- EP-A2- 0 951 130
- WO-A1-01/17094
- WO-A1-03/012955
- GB-A- 2 419 475
- US-A1- 2002 084 703
- US-A1- 2003 048 030

## Description

La présente invention concerne un conduit d'écoulement d'air pour un rotor et un stator d'une machine électrique. La présente invention concerne également une machine électrique tournante comprenant un tel conduit de refroidissement et un procédé de fabrication d'un tel conduit de refroidissement.

Le stator et/ou le rotor d'une machine électrique tournante peuvent comporter un empilement de tôles magnétiques de forme sensiblement circulaire maintenues entre elles par des tirants ou des barreaux. Les tirants ou barreaux compactent et maintiennent les tôles magnétiques. Les tôles magnétiques statoriques comportent un évidement en leur centre. Les tôles rotoriques sont de forme circulaire, et comprennent un évidement en leur centre.

Pendant le fonctionnement d'une machine électrique tournante, en mode moteur ou générateur, celle-ci dissipe une partie de l'énergie reçue sous forme de chaleur générée par les pertes fer et les pertes Joules du rotor et du stator. Cette production de chaleur augmente la température de l'ensemble rotor-stator et dégrade le rendement de la machine électrique tournante.

Afin de maintenir les performances de la machine électrique tournante, il est nécessaire de refroidir l'ensemble rotor-stator.

Dans le but de refroidir l'ensemble rotor-stator, une solution consiste à insérer des distanceurs entre des paquets de tôles magnétiques formant le rotor et/ou le stator de la machine électrique tournante, afin de délimiter un conduit d'écoulement d'air dans le rotor et/ou le stator. Les distanceurs sont répartis sur les tôles de telle manière que la rigidité du rotor ou du stator ne soit pas compromise. Chaque distanceur supporte une charge d'approximativement 130 kg. Cette charge dépend de la pression de compactage des tôles magnétiques et de la section du distanceur.

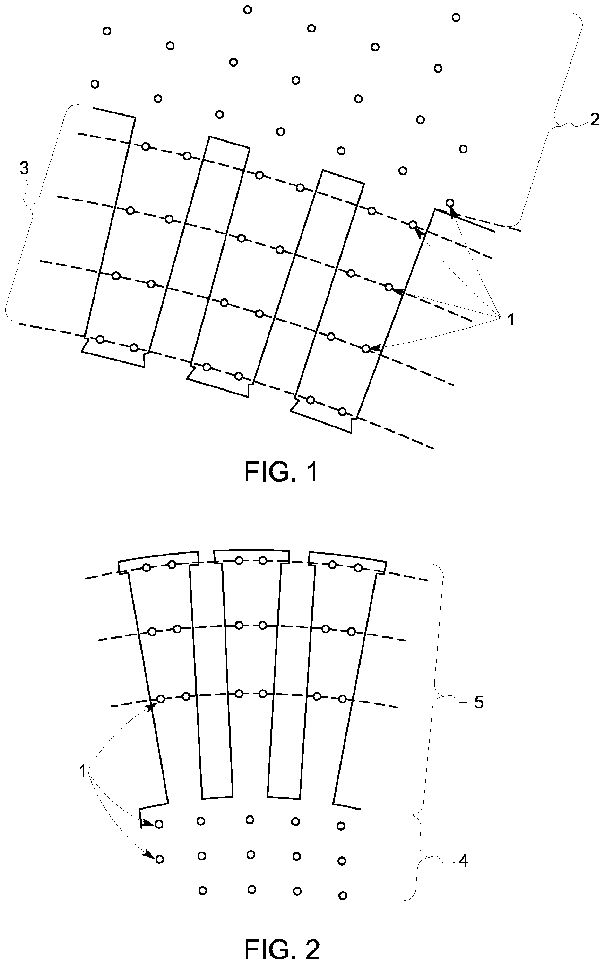

On a représenté à la figure 1 une configuration de distanceurs de forme circulaire disposés sur la dent d'une tôle magnétique statorique selon l'état de la technique. Les distanceurs 1 de forme circulaire sont dénommés ci-après pions. Une tôle magnétique statorique comporte une culasse 2 et plusieurs dents 3 situées sur la périphérie interne de la tôle.

On a également représenté à la figure 2 une configuration de distanceurs 1 de forme circulaire disposés sur la dent d'une tôle magnétique rotorique selon l'état de la technique. Une tôle magnétique rotorique comporte une culasse 4 et plusieurs dents 5 situées sur la périphérie externe de la tôle.

Selon la largeur de la dent et pour ne pas poinçonner les tôles magnétiques en contact avec au moins un pion 1, plusieurs pions 1 sont disposés sur un cercle représenté en trait pointillé dont le centre est sur l'axe de rotation du rotor de la machine électrique tournante et le rayon est égal à la distance séparant le centre du cercle et le centre d'un pion.

On pourra à cet égard se référer aux documents US4,515,523, US7,175,386, US8,360,725, US2014/0064983 et US2015/0093252 qui décrivent des distanceurs pour des turbines à gaz et à vapeur permettant d'améliorer des échanges thermiques.

Cependant, les dispositifs décrits dans ces documents ne sont pas transposables à une machine électrique tournante.

On pourra se référer au document US6,583,526 qui décrit le placement de pions sur les dents d'une tôle rotorique. Les pions sont répartis de telle manière que trois pions forme un triangle ou de telle manière que les pions soient décalés l'un par rapport à l'autre.

Les documents WO 03/012955 A1 et EP 0951 130 montrent des exemples avec des pions disposés entre deux paquets de tôles successifs.

On pourra par ailleurs se référer au document US6,815,848 qui décrit le placement des pions sur les dents d'une tôle rotorique.

Cependant, les pions sont disposés sur les dents des tôles magnétiques de telle façon que sur chaque dent au moins deux pions sont alignés sur un cercle dont le centre est sur l'axe de rotation de la machine électrique tournante et le rayon est égal à la distance séparant le centre du cercle et le centre d'un pion.

Lorsque le flux d'air traverse le conduit d'écoulement, les pions situés sur un cercle de même diamètre obstruent le conduit d'écoulement.

Par conséquent, les échanges thermiques sont dégradés.

Il est donc proposé de pallier les inconvénients liés à la disposition des pions selon l'état de la technique.

Au vu de ce qui précède l'invention propose, selon un aspect, un élément de machine électrique tournante, de type rotor ou stator, comprenant une pluralité d'empilements de tôles magnétiques équipées chacune d'une dent comprenant des encoches destinées à recevoir des enroulements électriques, et des pions disposés entre deux paquets de tôles successifs formant un conduit d'écoulement.

Selon une caractéristique générale de cet élément de machine électrique tournante, une partie des pions est répartie de manière asymétrique sur la dent de la tôle du stator ou du rotor par rapport à un axe médian de la largeur de la dent.

De préférence, cet élément de machine électrique tournante constitue un rotor ou un stator de la machine électrique tournante.

Selon une autre caractéristique, la distance circonférentielle entre les centres de deux pions adjacents projetée sur un axe défini par la largeur de la dent est comprise entre 4/10 et 8/10, de préférence entre 1/2 et 6/10 de la largeur de la dent.

Selon encore une autre caractéristique, la distance radiale entre les centres de deux pions adjacents est comprise entre 1/10 et 3/2, de préférence entre 1/3 et 9/10 de la distance circonférentielle entre les centres de deux pions adjacents projetée suivant un axe défini par la largeur de la dent.

De préférence, la section du pion est triangulaire, carrée, hexagonale, de préférence ronde.

Dans un mode de réalisation, le pion est en forme de cylindre, de cône, de tonneau, de diabolo, de préférence en forme de cylindre.

Selon encore une autre caractéristique, les pions sont en matière métallique, de préférence en acier.

Avantageusement, chaque pion est fixé sur la dent par collage, brasage, soudage, moulage, ou obtenu par emboutissage, de préférence par soudage.

Selon une autre caractéristique, la section du pion est comprise dans un carré d'arête de 1 à 10 mm, de préférence 3 mm.

Selon encore une autre caractéristique, la longueur du pion est comprise entre 2 et 20 mm, de préférence entre 5 et 10 mm, préférentiellement 5 mm.

Il est proposé selon un autre aspect une machine électrique tournante comprenant un rotor et un stator, l'un au moins desdits rotor et stator comprenant une pluralité d'empilements de tôles magnétiques équipées chacune d'une dent comprenant des encoches destinées à recevoir des enroulements électriques, et des pions disposés entre deux paquets de tôles successifs formant un conduit d'écoulement.

Avantageusement, une partie des pions est répartie de manière asymétrique sur la dent de la tôle du stator ou du rotor par rapport à un axe médian de la largeur de la dent.

Il est proposé selon un aspect un procédé de réalisation d'une dent d'une tôle magnétique de rotor ou de stator.

Selon une caractéristique générale de ce procédé, celui-ci comporte au moins une étape durant laquelle on dispose sur la dent des pions de manière asymétrique par rapport à un axe médian de la largeur de la dent.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- les figures 1 et 2, dont il a déjà été fait mention, illustrent la disposition de pions disposés sur la dent d'une tôle magnétique statorique et rotorique selon l'état de la technique ;
- la figure 3 illustre un mode de réalisation d'un stator d'une machine électrique tournante ;
- la figure 4 illustre un mode de réalisation d'une portion de tôle magnétique rotorique ; et
- la figure 5 illustre un mode réalisation d'une dent d'une tôle magnétique statorique.

La présente description concerne, de manière nullement limitative, un mode de réalisation d'une machine électrique tournante comprenant des empilements de tôles magnétiques statoriques incluses dans le stator de la machine électrique tournante. Bien entendu, on ne sort pas du cadre de l'invention lorsque le rotor est réalisé à partir de tels empilements ou lorsque la machine électrique tournante est équipée d'un stator ou d'un rotor, d'un rotor et d'un stator réalisés à partir de tels empilements.

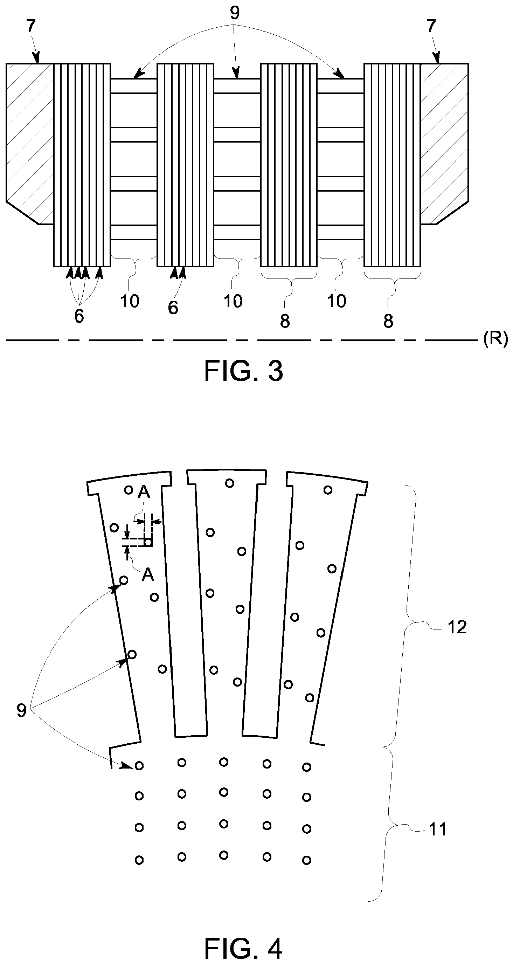

On se réfère à la figure 3 qui illustre un mode de réalisation d'un stator d'une machine électrique tournante.

Un stator de machine électrique tournante comprend une structure métallique de forme cylindrique, des empilements de tôles magnétiques 6, des tirants ou des barreaux non représentés. Il comprend en outre des enroulements électriques non représentés, destinés à être connectés à un dispositif de commande non représenté.

L'axe de révolution de la structure métallique de forme cylindrique est représenté par l'axe (R).

La structure métallique comprend deux plateaux de serrage 7. Les tôles magnétiques 6 sont compactées axialement entre les deux plateaux de serrage 7. Les plateaux de serrage 7 sont reliés entre eux par des tirants ou des barreaux assurant ainsi la compaction et la rigidité du stator ou du rotor.

Le rotor de la machine électrique tournante vient s'insérer au centre de la structure métallique de telle sorte que l'axe de rotation du rotor coïncide sensiblement avec l'axe (R).

Les tôles magnétiques 6 sont regroupées en paquets de tôles 8 séparés l'un de l'autre par des pions 9 disposés entre eux. L'espace ainsi créé forme un conduit d'écoulement 10.

Le fluide de refroidissement s'écoulant dans le conduit d'écoulement 10 peut être un liquide, de l'huile, un gaz, de préférence de l'air.

Le rotor d'une machine électrique tournante comprenant un arbre présente une constitution similaire à celle d'un stator. Les tôles magnétiques rotoriques sont de forme circulaire, regroupées en paquets de tôles séparés par des pions 9 et maintenus par des tirants ou des barreaux, ou par l'arbre du rotor lui-même.

On se réfère à la figure 4 qui illustre une portion d'une tôle magnétique rotorique comportant les pions 9.

La tôle magnétique comporte une culasse 11 et des dents 12. La culasse 11 est située sur la périphérie de la tôle et s'étend jusqu'aux dents 12 qui sont situées sur la périphérie externe de la tôle. Les dents 12 forment des encoches destinées à recevoir les enroulements rotoriques.

Les pions 9 sont répartis sur toute la surface de la tôle magnétique.

Les pions 9 sont fixés sur la tôle magnétique par collage, brasage, soudage, moulage ou obtenus par emboutissage. Ils sont de préférence soudés sur la tôle magnétique.

Les pions 9 sont de préférence tous de même section, mais ils peuvent être de sections différentes. Ils peuvent être de section triangulaire, carrée ou hexagonale. Ils sont de préférence de section ronde.

Ils sont de préférence tous de la même forme, mais ils peuvent être de formes différentes. Ils peuvent être en forme de cylindre, de cône, de tonneau ou de diabolo. Ils sont de préférence en forme de cylindre.

Les pions 9 sont fabriqués en matière métallique, de préférence en acier.

La section des pions 9 est comprise dans un carré d'arête A de 1 à 10 mm, de préférence d'arête a de 3 mm. Leur longueur est comprise entre 2 et 20 mm, de préférence entre 5 et 10 mm, préférentiellement leur longueur est égale à 5 mm.

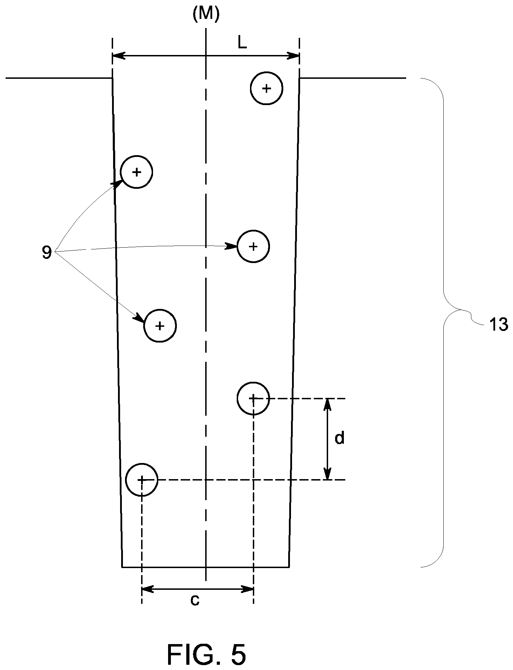

On se réfère à la figure 5 qui illustre une dent 13 de largeur moyenne L d'une tôle magnétique statorique. On ne sort pas du cadre de l'invention si les dents des tôles magnétiques rotoriques comprennent de pions disposés de la même façon que ceux des dents des tôles statoriques tel que décrit dans ce qui suit.

La dent 13 comporte un axe médian (M) de la largeur L de la dent et de direction radiale.

La dent 13 comporte les pions 9 qui sont répartis de manière asymétrique sur la dent 13 de la tôle magnétique par rapport à l'axe médian (M) de la dent. Les pions 9 sont éloignés d'une distance suffisante des bords de la dent de sorte qu'ils puissent être fixés sur la dent par le procédé choisi.

Les pions 9 sont répartis de telle sorte que la distance c circonférentielle entre les centres de deux pions 9 adjacents projetée sur un axe défini par la largeur L de la dent est comprise entre 4/10 et 8/10, de préférence entre 1/2 et 6/10 de la largeur L de la dent, et que la distance radiale d entre les centres de deux pions adjacents est comprise entre 1/10 et 3/2, de préférence entre 1/3 et 9/10 de la distance circonférentielle c entre les centres de deux pions adjacents projetée suivant un axe défini par la largeur L de la dent.

Les distances c et d peuvent être différentes pour chaque couple de pions 9 adjacents.

Des zones de turbulences apparaissent au voisinage d'un pion.

La disposition des pions selon les modes de réalisation de l'invention crée des zones de turbulences supplémentaires puisque la disposition des pions est asymétrique sur la dent par rapport à la disposition des pions connue de l'état de la technique.

Ces zones de turbulences supplémentaires améliorent les échanges thermiques. Le coefficient d'échange thermique entre le flux de fluide de refroidissement, de préférence de l'air et les enroulements statoriques et/ou les enroulements rotoriques disposés dans les encoches formées par deux dents en est amélioré.

La température des enroulements est réduite de 3 à 6°C selon la taille, la puissance de la machine électrique tournante et le débit du fluide de refroidissement, de préférence de l'air dans les conduits de refroidissements. L'échauffement des enroulements est réduit de 2 à 5% selon les cas. De même, pour une même température des enroulements, la puissance délivrée par la machine électrique tournante est augmentée de 2 à 5%.

## Revendications

1. Elément de machine électrique tournante, de type rotor ou stator, comprenant une pluralité d'empilements (8) de tôles magnétiques équipées chacune d'une dent (12, 13) comprenant des encoches destinées à recevoir des enroulements électriques, et des pions (9) disposés entre deux paquets de tôles successifs formant un conduit d'écoulement, les paquets étant séparés l'un de l'autre par les pions (9), une partie des pions étant répartie de manière asymétrique sur la dent de la tôle du stator ou du rotor par rapport à un axe médian (M) de la largeur (L) de la dent, **caractérisé en ce que** la distance (c) circonférentielle entre les centres de deux pions (9) adjacents projetée sur un axe défini par la largeur (L) de la dent est comprise entre 4/10 et 8/10, de préférence entre 1/2 et 6/10 de la largeur (L) de la dent.

2. Elément de machine électrique tournante selon la revendication 1, constituant un rotor de la machine électrique tournante.

3. Elément de machine électrique tournante selon la revendication 1, constituant un stator de la machine électrique tournante.

4. Elément de machine électrique tournante selon l'une quelconque des revendications 1 à 3, dans lequel la distance (d) radiale entre les centres de deux pions (9) adjacents est comprise entre 1/10 et 3/2, de préférence entre 1/3 et 9/10 de la distance circonférentielle (c) entre les centres de deux pions (9) adjacents projetée suivant un axe défini par la largeur (L) de la dent.

5. Elément de machine électrique tournante selon l'une quelconque des revendications 1 à 4, dans lequel la section du pion (9) est triangulaire, carrée, hexagonale, de préférence ronde.

6. Elément de machine électrique tournante selon l'une quelconque des revendications 1 à 5, dans lequel le pion (9) est en forme de cylindre, de cône, de tonneau, de diabolo, de préférence en forme de cylindre.

7. Elément de machine électrique tournante selon l'une quelconque des revendications 1 à 6, dans lequel les pions (9) sont en matière métallique, de préférence en acier.

8. Elément de machine électrique tournante selon l'une quelconque des revendications 1 à 7, dans lequel chaque pion (9) est fixé sur la dent par collage, brasage, soudage, moulage, ou obtenu par emboutissage, de préférence par soudage.

9. Elément de machine électrique tournante selon l'une quelconque des revendications 1 à 8, dans lequel la section du pion (9) est comprise dans un carré d'arête (A) de 1 à 10 mm, de préférence 3mm.

10. Elément de machine électrique tournante selon l'une quelconque des revendications 1 à 9, dans lequel la longueur du pion (9) est comprise entre 2 et 20 mm, de préférence entre 5 et 10 mm, préférentiellement 5 mm.

11. Machine électrique tournante comprenant un rotor et un stator, l'un au moins desdits rotor et stator étant selon l'une quelconque des revendications 1 à 10 et comprenant une pluralité d'empilements (8) de tôles magnétiques équipées chacune d'une dent (12, 13) comprenant des encoches destinées à recevoir des enroulements électriques, et des pions (9) disposés entre deux paquets de tôles successifs formant un conduit d'écoulement, les paquets étant séparés l'un de l'autre par les pions (9), une partie des pions étant répartie de manière asymétrique sur la dent de la tôle du stator ou du rotor par rapport à un axe médian (M) de la largeur (L) de la dent, **caractérisé en ce que** la distance (c) circonférentielle entre les centres de deux pions (9) adjacents projetée sur un axe défini par la largeur (L) de la dent est comprise entre 4/10 et 8/10, de préférence entre 1/2 et 6/10 de la largeur (L) de la dent.

12. Procédé de réalisation d'une dent d'une tôle magnétique de rotor ou de stator selon l'une quelconque des revendications 1 à 10, le procédé comportant au moins une étape durant laquelle on dispose sur la dent des pions (9) de manière asymétrique par rapport à un axe médian (M) de la largeur (L) de la dent **caractérisé en ce que** la distance (c) circonférentielle entre les centres de deux pions (9) adjacents projetée sur un axe défini par la largeur (L) de la dent est comprise entre 4/10 et 8/10, de préférence entre 1/2 et 6/10 de la largeur (L) de la dent.

## Patentansprüche

1. Element einer elektrischen Rotationsmaschine, vom Typ Rotor oder Stator, eine Vielzahl von Stapeln (8) von Magnetblechen umfassend, die jeweils mit einem Zahn (12, 13) ausgerüstet sind, der Einkerbungen umfasst, die dazu bestimmt sind, elektrische Wicklungen aufzunehmen, und Zapfen (9), die zwischen zwei aufeinanderfolgenden Blechpaketen angeordnet sind, einen Strömungskanal bildend, wobei die Pakete durch die Zapfen (9) voneinander getrennt sind, wobei ein Teil der Zapfen asymmetrisch auf dem Zahn des Blechs des Stators oder des Rotors in Bezug auf eine Mittelachse (M) der Breite (L) des Zahnes verteilt ist, **dadurch gekennzeichnet, dass** der umfängliche Abstand (c) zwischen den Zentren zweier angrenzender Zapfen (9), der auf eine Achse projiziert ist, die durch die Breite (L) des Zahnes definiert wird, zwischen 4/10 und 8/10, vorzugsweise zwischen 1/2 und 6/10 der Breite (L) des Zahnes enthalten ist.

2. Element einer elektrischen Rotationsmaschine nach Anspruch 1, das einen Rotor der elektrischen Rotationsmaschine bildet.

3. Element einer elektrischen Rotationsmaschine nach Anspruch 1, das einen Stator der elektrischen Rotationsmaschine bildet.

4. Element einer elektrischen Rotationsmaschine nach einem der Ansprüche 1 bis 3, wobei der radiale Abstand (d) zwischen den Zentren zweier angrenzender Zapfen (9) zwischen 1/10 und 3/2, vorzugsweise zwischen 1/3 und 9/10 des umfänglichen Abstandes (c) zwischen den Zentren zweier angrenzender Zapfen (9) enthalten ist, der auf eine Achse projiziert ist, die durch die Breite (L) des Zahnes definiert wird.

5. Element einer elektrischen Rotationsmaschine nach einem der Ansprüche 1 bis 4, wobei der Querschnitt des Zapfens (9) dreieckig, quadratisch, sechseckig, vorzugsweise rund ist.

6. Element einer elektrischen Rotationsmaschine nach einem der Ansprüche 1 bis 5, wobei der Zapfen (9) in Form eines Zylinders, eines Kegels, einer Tonne, einer doppelkegeligen Rolle, vorzugsweise in Form eines Zylinders ist.

7. Element einer elektrischen Rotationsmaschine nach einem der Ansprüche 1 bis 6, wobei die Zapfen (9) aus metallischem Material, vorzugsweise aus Stahl sind.

8. Element einer elektrischen Rotationsmaschine nach einem der Ansprüche 1 bis 7, wobei jeder Zapfen (9) auf dem Zahn durch Kleben, Löten, Schweißen, Formen befestigt ist, oder durch Tiefziehen erhalten wird, vorzugsweise durch Schweißen.

9. Element einer elektrischen Rotationsmaschine nach einem der Ansprüche 1 bis 8, wobei der Querschnitt des Zapfens (9) in einem Kantenquadrat (A) von 1 bis 10 mm, vorzugsweise von 3 mm enthalten ist.

10. Element einer elektrischen Rotationsmaschine nach einem der Ansprüche 1 bis 9, wobei die Länge des Zapfens (9) zwischen 2 und 20 mm, vorzugsweise zwischen 5 und 10 mm, enthalten ist, bevorzugt 5 mm beträgt.

11. Elektrische Rotationsmaschine, umfassend einen Rotor und einen Stator, wobei mindestens einer von dem Rotor und Stator nach einem der Ansprüche 1 bis 10 ist und eine Vielzahl von Stapeln (8) von Magnetblechen umfasst, die jeweils mit einem Zahn (12, 13) ausgerüstet sind, der Einkerbungen umfasst, die dazu bestimmt sind, elektrische Wicklungen aufzunehmen, und Zapfen (9), die zwischen zwei aufeinanderfolgenden Blechpaketen angeordnet sind, einen Strömungskanal bildend, wobei die Pakete durch die Zapfen (9) voneinander getrennt sind, wobei ein Teil der Zapfen asymmetrisch auf dem Zahn des Blechs des Stators oder des Rotors in Bezug auf eine Mittelachse (M) der Breite (L) des Zahnes verteilt ist, **dadurch gekennzeichnet, dass** der umfängliche Abstand (c) zwischen den Zentren zweier angrenzender Zapfen (9), der auf eine Achse projiziert ist, die durch die Breite (L) des Zahnes definiert wird, zwischen 4/10 und 8/10, vorzugsweise zwischen 1/2 und 6/10 der Breite (L) des Zahnes enthalten ist.

12. Verfahren zur Herstellung eines Zahnes eines Rotor-oder Stator-Magnetblechs nach einem der Ansprüche 1 bis 10, wobei das Verfahren mindestens einen Schritt beinhaltet, bei dem auf dem Zahn Zapfen (9) in Bezug auf eine Mittelachse (M) der Breite (L) des Zahnes asymmetrisch angeordnet werden, **dadurch gekennzeichnet, dass** der umfängliche Abstand (c) zwischen den Zentren zweier angrenzender Zapfen (9), der auf eine Achse projiziert ist, die durch die Breite (L) des Zahnes definiert wird, zwischen 4/10 und 8/10, vorzugsweise zwischen 1/2 und 6/10 der Breite (L) des Zahnes enthalten ist.

## Claims

1. A rotary electrical machine element, of the rotor or stator type, comprising a plurality of stacks (8) of magnetic laminations equipped with a tooth (12, 13) comprising slots intended to receive electrical windings, and pins (9) disposed between two successive lamination packs forming a flow conduit, the packs being separated from each other by the pins (9), a part of the pins being asymmetrically distributed on the tooth of the stator or rotor lamination with respect to a median axis (M) of the width (L) of the tooth, **characterised in that** the circumferential distance (c) between the centres of two adjacent pins (9) projected onto an axis defined by the width (L) of the tooth is comprised between 4/10 and 8/10, preferably between 1/2 and 6/10 of the width (L) of the tooth.

2. The rotary electrical machine element according to claim 1, constituting a rotor of the rotary electrical machine.

3. The rotary electrical machine element according to claim 1, constituting a stator of the rotary electrical machine.

4. The rotary electrical machine element according to any one of claims 1 to 3, wherein the radial distance (d) between the centres of two adjacent pins (9) is comprised between 1/10 and 3/2, preferably between 1/3 and 9/10 of the circumferential distance (c) between the centres of two adjacent pins (9) projected along an axis defined by the width (L) of the tooth.

5. The rotary electrical machine element according to any one of claims 1 to 4, wherein the section of the pin (9) is triangular, square, hexagonal, preferably round.

6. The rotary electrical machine element according to any one of claims 1 to 5, wherein the pin (9) is in the shape of a cylinder, cone, barrel, diabolo, preferably in the shape of a cylinder.

7. The rotary electrical machine element according to any one of claims 1 to 6, wherein the pins (9) are made of metal, preferably steel.

8. The rotary electrical machine element according to any one of claims 1 to 7, wherein each pin (9) is fixed on the tooth by bonding, brazing, welding, moulding, or obtained by stamping, preferably by welding.

9. The rotary electrical machine element according to any one of claims 1 to 8, wherein the section of the pin (9) is comprised in an edge square (A) of 1 to 10 mm, preferably 3mm.

10. The rotary electrical machine element according to any one of claims 1 to 9, wherein the length of the pin (9) is comprised between 2 and 20 mm, preferably between 5 and 10 mm, preferably 5 mm.

11. A rotary electrical machine comprising a rotor and a stator, at least one of said rotor and stator being according to any one of claims 1 to 10 and comprising a plurality of stacks (8) of magnetic laminations each equipped with a tooth (12, 13) comprising slots intended to receive electrical windings, and pins (9) disposed between two successive lamination packs forming a flow conduit, the packs being separated from each other by the pins (9), a part of the pins being asymmetrically distributed on the tooth of the stator or rotor lamination with respect to a median axis (M) of the width (L) of the tooth, **characterised in that** the circumferential distance (c) between the centres of two adjacent pins (9) projected onto an axis defined by the width (L) of the tooth is comprised between 4/10 and 8/10, preferably between 1/2 and 6/10 of the width (L) of the tooth.

12. A method for producing a tooth of a rotor or stator magnetic lamination according to any one of claims 1 to 10, the method including at least one step during which pins (9) are asymmetrically disposed on the tooth with respect to a median axis (M) of the width (L) of the tooth **characterised in that** the circumferential distance (c) between the centres of two adjacent pins (9) projected onto an axis defined by the width (L) of the tooth is comprised between 4/10 and 8/10, preferably between 1/2 and 6/10 of the width (L) of the tooth.
